# EUROPÄISCHE PATENTSCHRIFT

(11) **EP 0 779 408 B1**
(45) Veröffentlichungstag und Bekanntmachung des Hinweises auf die Patenterteilung: **29.08.2001**
(21) Anmeldenummer: 96119831.4
(22) Anmeldetag: 11.12.1996
(51) Int. Cl.: E06C 7/50, E06C 1/32, B21D 39/04, F16B 17/00

(54) **Verbindung zwischen einem Leiterholm und einem Gelenkschenkel eines Leitergelenks**
Connection of a ladder stile to a ladder hinge plate
Fixation d'un montant d'échelle à une paumelle d'articulation pour échelle

(30) Priorität: 14.12.1995 DE 19546669
(43) Veröffentlichungstag der Anmeldung: 18.06.1997
(73) Patentinhaber: Rauschenberger, Jörg, Dipl.-Ing., 71679 Asperg (DE)
(72) Erfinder: Rauschenberger, Jörg, Dipl.-Ing., 71679 Asperg (DE)
(74) Vertreter: Rumrich, Gabriele

(56) Entgegenhaltungen:
- DE-A- 3 737 481
- DE-A- 4 344 921

## Beschreibung

Die Erfindung betrifft eine Verbindung eines Leiterholmes mit einem Leitergelenk nach dem Oberbegriff des ersten Patentanspruchs.

Derzeitig wird die Verbindung zwischen den Leiterholmen und den beiden Gelenkschenkeln des Leitergelenkes fast ausschließlich über Nietverbindungen hergestellt. Dabei werden entweder durchgehende Niete oder Blindniete eingesetzt, die ausschließlich an den längeren Seiten der Profile, die rechtwinklig zur Gelenkachse und rechtwinklig zum Kraftangriff im Belastungsfall verlaufen, eingebracht werden (z. B. DE 37 37 481). Nachteilig bei den Nietverbindungen ist deren relativ geringe tragende Fläche und das Spiel zwischen den Nieten und den Bohrungen, wodurch sich im Belastungsfall eine einseitige Anlage der Niete an den Bohrungen ergibt und es, bedingt durch die Lochleibung, zu einer Deformierung der Bohrungen kommen kann. Um die notwendige Sicherheit zu gewährleisten, sind relativ viele Nietverbindungen erforderlich. In DE 43 44 921 A1 wird ein Verfahren und eine Vorrichtung zum Verbinden von wenigstens zwei Bauteilen beschrieben, welches unter anderem auch bei der Schaffung einer Verbindung zwischen Leiterholm und Gelenkschenkel eines Leitergelenkes anwendbar ist. Im Gelenkschenkel und im Leiterholm werden Bohrungen eingebracht, in welche der Werkstoff eines zusätzlichen Profilelementes mit Hilfe eines Bolzens eingebracht wird, wobei der Bolzen im Leiterholm verbleibt. Auch hierbei wird die Fügeverbindung an den Profilseiten eingebracht, die rechtwinklig zur Gelenkachse und zum Kraftangriff liegen.

Bei den bekannten Verbindungsarten müssen sich Gelenkschenkel und Leiterholme in einem relativ großen Bereich überlappen. Weiterhin kann bei einer Überlastung, durch die Hebelwirkung zwischen dem Leiterholm und dem Gelenkschenkel, eine unerwünschte Verformung am Ende des Leiterholmes auftreten. Dabei weitet sich der Leiterholm an der schmalen Seite auf, gegen die im Belastungsfall der Gelenkschenkel gepreßt wird.

Aufgabe der Erfindung ist es, eine kostengünstige und zuverlässige Verbindung zwischen dem Leiterholm und dem jeweiligen Gelenkschenkel des Leitergelenks zu schaffen, mit der die überlappende Länge zwischen Leiterholm und Gelenkschenkel gering ist und die unerwünschten Verformungen am Ende des Leiterholmes im Belastungsfall verringert bzw. ausschließt.

Diese Aufgabe wird erfindungsgemäß mit den Merkmalen des kennzeichnenden Teiles des ersten Patentanspruchs und den weiteren Merkmalen in den Unteransprüchen gelöst.

Der Grundgedanke der Erfindung ist dabei, von den bisher üblichen Fügeverbindungen in den Profilseiten der Gelenkschenkel und der Leiterholme, die rechtwinklig zur Gelenkachse und in der Ebene des Kraftangriffs liegen, grundsätzlich abzukommen.

Die Fügeverbindungen werden erfindungsgemäß erstmalig in den Eckbereichen der Profile der Leiterholme und Gelenkschenkel angeordnet. Dabei ist vorgesehen, durch entsprechende Umformverfahren den Werkstoff des Leiterholmes in entsprechende Ausnehmungen oder Vertiefungen des Gelenkschenkels einzubringen und somit eine form- und kraftschlüssige Verbindung herzustellen. Vorteilhafter Weise werden im Bereich der Überlappung von Leiterholm und Gelenkschenkel in Längsrichtung des Leiterholmes mehrere Verbindungen hintereinander angeordnet. Über dem Umfang der Profile von Leiterholm und Gelenkschenkel werden die Fügeverbindungen vorzugsweise an mindestens zwei sich gegenüberliegenden Positionen vorgesehen. Vorteilhafter Weise werden an vier Positionen Fügeverbindungen hergestellt. Der Vorteil der Verbindung an den Eckpositionen ermöglicht ein einfaches Prägeverfahren.

Die Erfindung wird nachfolgend an einem Ausführungsbeispiel und zugehörigen Zeichnungen näher erläutert.

Es zeigen:
- Fig. 1:: Darstellung eines Leitergelenkes in gestreckter Stellung mit an den Gelenkschenkeln befestigten Leiterholmen in Vorderansicht,
- Fig. 2:: Räumliche Darstellung einer durch Umformen hergestellten Verbindung, wobei die Fügepositionen in den Eckbereichen der Profile liegen,
- Fig. 3:: Schnittdarstellung gemäß Fig. 2
- Fig. 4:: Fügeverbindung unter Anwendung eines T-förmigen Leiterprofils,
- Fig. 5:: Fügeverbindung bei einem Gelenkschenkel in Form einer Lamelle.

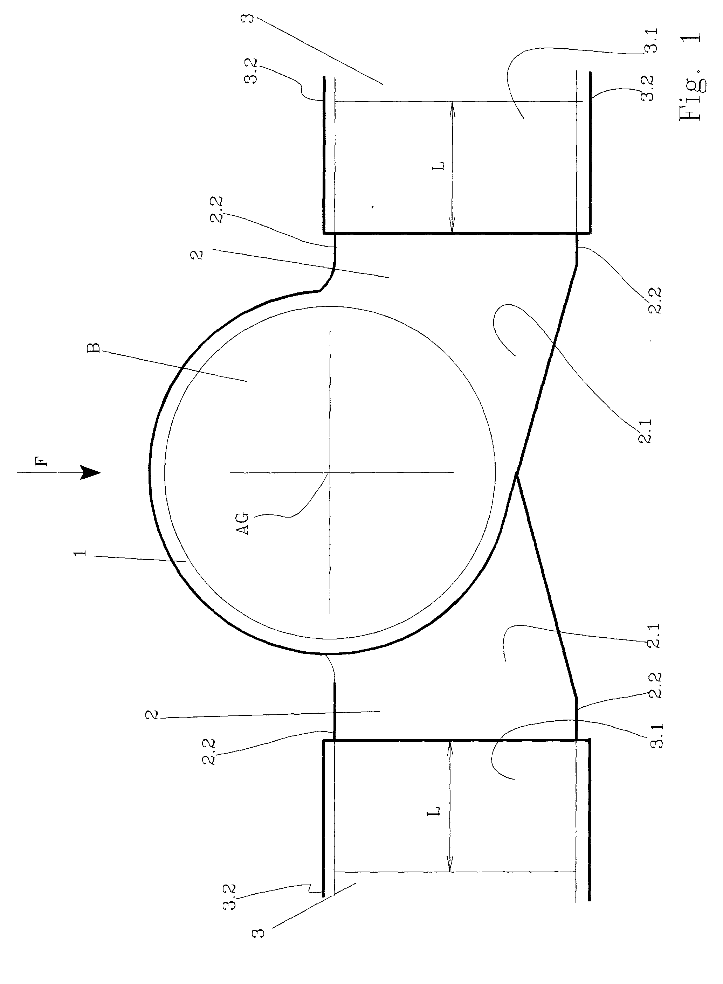

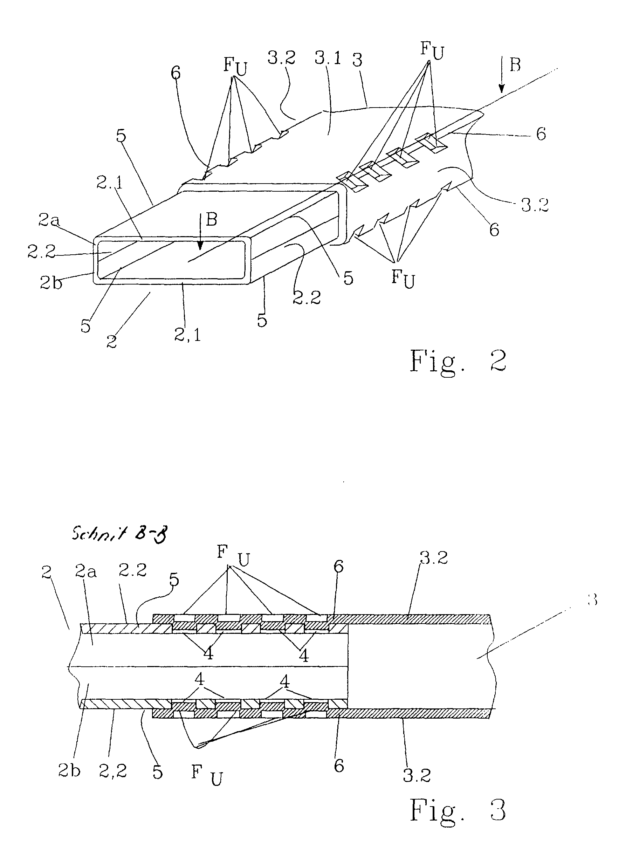

Gemäß Fig. 1 und 2 weist das Leitergelenk 1 Gelenkschenkel 2 auf, wobei jeder Gelenkschenkel 2 aus zwei U-Profilen 2a und 2b gebildet wird. Beide Gelenkschenkel 2 sind um eine gemeinsame Achse AG schwenkbar. Zur Betätigung weist das Leitergelenk 1 ein Betätigungselement G auf. Jeder Gelenkschenkel 2 wird in das Ende eines Leiterholmes 3 eingeschoben, so daß sich der Gelenkschenkel 2 und der Leiterholm 3 um die Länge L überlappen. Die Fügeverbindung zwischen beiden erfolgt in Form von durch Umformen hergestellte Verbindungen FU, wobei diese nicht an den längeren Profilseiten 2.1 und 3.1, die rechtwinklig zur Gelenkachse AG liegen, oder an den kurzen Profilseiten 2.2 und 3.2 angeordnet werden, sondern in den Eckbereichen. Es sind in diesem Ausführungsbeispiel in jedem Eckbereich jeweils vier Fügeverbindungwen FU in Längsrichtung des Leiterholmes 3 hintereinander angeordnet. Zur Herstellung der Fügeverbindung FU werden an den vorgesehen Fügepositionen in den Gelenkschenkeln 2 des Leitergelenks 1 Ausnehmungen 4 vorgesehen, in welche der Werkstoff des jeweiligen Leiterholmes 3 durch ein geeignetes Umformverfahren eingeformt wird (Fig. 2). Vorzugsweise findet dabei ein Prägeverfahren Anwendung, bei welchem mit einem insbesondere viereckigen oder kreisförmigen Prägestempel der Werkstoff des Leiterholmes 3 in die Ausnehmungen 4 des Gelenkschenkels 2 geformt wird. Ein geeignetes Umformverfahren ist beispielsweise auch das Durchsetzen, Durchziehen oder das Quetschen.

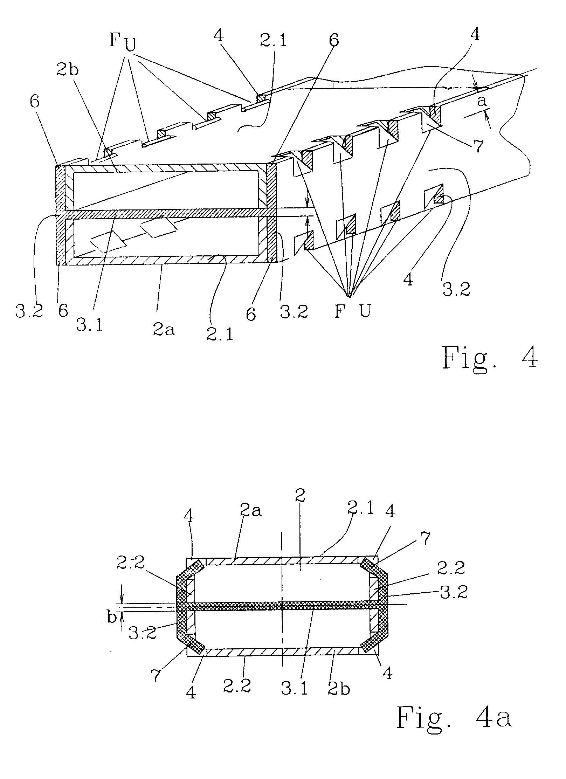

Gemäß Fig. 2 werden die durch Umformen hergestellten Fügeverbindungen FU an den Eckpositionen 5 der Profile der Gelenkschenkel 2 und somit an den Eckpositionen 6 der Leiterholme 3 im Bereich L der Überlappung vorgesehen. Im dargestellten Ausführungsbeispiel (Fig. 2) wurden in jedem Eckbereich 5 und 6 vier jeweils in Längsrichtung des Leiterholmes 3 hintereinander angeordnete Fügeverbindungen F_{U} vorgesehen. Diese durch Umformen hergestellten Fügeverbindungen F_{U} wurden durch Einprägen des Werkstoffs des Leiterholmes 3 in entsprechende Ausnehmungen 4 in den Eckbereichen 5 des Gelenkschenkels 2 erzeugt. In jedem Eckbereich 6 der Leiterholme 3 sind dabei vier Einprägungen im Bereich der Ausnehmungen 4 vorhanden. Eine Schnittdarstellung durch die mittels Einprägen hergestellten Fügeverbindungen F_{U} ist in Fig. 3 dargestellt. Dabei erkennt man, wie der Werkstoff des Leiterholmes 3 in die Ausnehmungen 4 in den Eckbereichen 5 des Gelenkschenkels 2 geformt wurde. Die Anzahl der hintereinander angeordneten Fügeverbindungen F_{U} kann entsprechend variiert werden. Durch die neuartige erfindungsgemäße Anordnung der durch Umformen hergestellten Fügeverbindungen F_{U} in den Eckpositionen 5 und 6 kann gem. Fig. 4 der Leiterholm 3 auch in der Form eines Doppel-T-Profils mit zwei parallelen Profilseiten 3.2 und einer dazwischen rechtwinklig liegenden Profilseite 3.1 ausgebildet sein. Die Gelenkschenkel 2 des Leitergelenks 1 weisen einen Abstand b auf, welcher der Profilstärke des in der Zeichnung horizontalen Profilseite 3.1 des Leiterholmes 3 entspricht. Der Werkstoff der senkrechten Profilseiten 3.2 des Leiterholmes 3 wird jeweils an den Außenkanten (Eckpositionen 6) im Bereich der in dem Gelenkschenkel 2 angeordneten Aussnehmumgen 4 in diese eingeformt. Ein Querschnitt dieser Fügeverbindung F_{U} wird in Fig. 4a gezeigt. Dazu werden die Eckseiten 6 der Profilseiten 3.2 des Leiterholmes 3 bereichsweise über eine Länge a getrennt und die dadurch entstehenden Laschen 7 in die Ausnehmungen 4 gebogen.

Neben Doppel-T-Profilen können auch U-Profile oder andere gleichartige Profile für den Leiterholm eingesetzt werden.

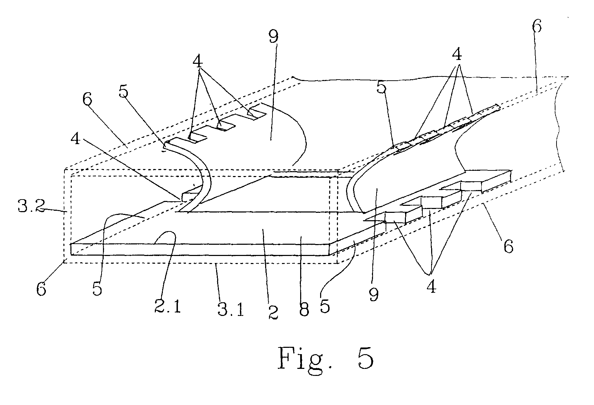

Anstelle von Gelenkschenkeln 2 aus jeweils zwei U-Profilen ist es auch möglich, einen Gelenkschenkel 2 in Form einer Lamelle 8 einzusetzen (siehe Fig. 5). Diese Lamelle liegt mit ihrer Profilseite 2.1 auf einer Profilseite 3.1 des Leiterholmes 3 auf. Um die Befestigung über eine durch Umformen hergestellte Fügeverbindung F_{U} in den vier Eckpositionen 6 des Leiterholmes 3 zu ermöglichen, wird in die Profilseite 2.1 der Lamelle 8 ein H-förmiger Einschnitt eingebracht. Die dadurch entstehenden Lappen 9 werden in Richtung zur gegenüberliegenden Seite 3.1 des Leiterholmes 3 gebogen. Vorher wurde in die Lamelle 8 an den Längsseiten Ausnehmungen 4 eingebracht. Weiterhin wurden in die Lappen 9 ebenfalls Ausnehmungen 4 eingebracht, so daß in jedem Eckbereich 6 des Leiterholmes 3 in den vorgesehenen Fügeverbindungen F_{U} Ausnehmungen 4 vorhanden sind.Wie v. g. bereits beschrieben, wird dann der Werkstoff aus den Eckbereichen 6 des Leiterholmes 3 in die Vertiefungen 4 durch ein geeignetes Umformverfahren geformt.

In Äquivalenz zu den v. g. beschriebenen Ausführungsbeispielen können auch die Gelenkschenkel 2 über die Leiterholme geschoben werden. Bei der Herstellung der Fügeverbindung F_{U} durch Umformen befinden sich die Ausnehmungen 4 dann im Leiterholm 3 und der Werkstoff der Gelenkschenkel 2 wird in diese eingeformt. Mit der neuartigen Anordnung der Fügeverbindungen F_{U} wird eine optimale Kraftübertragung vom Leiterholm 3 auf dem Gelenkschenkel 2 gewährleistet, da die Fügeverbindungen F_{U} in den Eckbereichen der Leiterholme 3 und Gelenkschenkel 2 liegen, auf welche durch das bei Kraftwirkung auftretende Drehmoment die hauptsächlichen Zug- bzw. Druckkräfte wirken. Die Kräfte werden daher optimal vom Leiterholm 3 auf den Gelenkschenkel 2 übertragen. Dadurch wird es möglich, die Länge L der Überlappung von Leiterholm 3 und Gelenkschenkel 2 zu minimieren. Eine Deformierung der Enden des Leiterholmes 3, die mit den Gelenkschenkeln 2 verbunden sind, wird nahezu ausgeschlossen. Insbesondere durch das Herstellen der Fügeverbindungen F_{U} mit einem geeigneten Umformverfahren wird eine einfache, kostengünstige und zugleich zuverlässige Verbindung geschaffen. Zusätzliche Verbindungselemente sind dabei nicht mehr erforderlich.

## Patentansprüche

1. Verbindung eines Leiterholmes mit einem Leitergelenk, wobei sich der Leiterholm (3) und der Gelenkschenkel (2) des Leitergelenkes (1) in einem Bereich (L) überlappen, in dem durch Umformen hergestellte Fügeverbindungen angeordnet sind, bei denen Werkstoff des Leiterholmes (3) in Ausnehmungen (4) oder Vertiefungen des Gelenkschenkels (2) einbringbar ist und umgekehrt, **dadurch gekennzeichnet,** daß die Fügeverbindungen (F_{N}, F_{U}) derart an Kanten bildenden Eckbereichen (5, 6) der Gelenkschenkel (2) und Leiterholme (3) angeordnet sind, daß der Werkstoff aus Kanten heraus in Ausnehmungen (4) oder Vertiefungen von Kanten einbringbar ist.

2. Verbindung eines Leiterholmes mit einem Leitergelenk nach Anspruch 1, **dadurch gekennzeichnet,** daß die in den Gelenkschenkeln (2) vorgesehenen Ausnehmungen (4) und die durch Umformen hergestellte Fügeverbindung (F_{U}) in der Draufsicht eine im wesentlichen rechteckige oder kreisförmige Form aufweisen.

3. Verbindung eines Leiterholmes mit einem Leitergelenk nach Anspruch 1 oder 2, **dadurch gekennzeichnet,** daß in jedem Eckbereich (5, 6) des Gelenkschenkels (2) und des Leiterholmes (3) mindestens eine durch Umformen hergestellte Fügeverbindung (F_{U}) angeordnet ist.

4. Verbindung eines Leiterholmes mit einem Leitergelenk nach einem der Ansprüche 1 bis 3, **dadurch gekennzeichnet,** daß in Längsrichtung des Leiterholmes (3) mehrere Fügeverbindungen (F_{N}, F_{U}) hintereinander angeordnet sind.

5. Verbindung eines Leiterholmes mit einem Leitergelenk nach einem der Ansprüche 1 bis 4, **dadurch gekennzeichnet,** daß bei Verwendung eines Gelenkschenkels (2) in Form einer Lamelle (8) in diese ein H-förmiger Einschnitt eingebracht ist, und daß die Lappen (9), die durch den Einschnitt gebildet werden in Richtung zur gegenüberliegenden Seite des Leiterholmes (3) gebogen werden, so daß sie mit ihren Außenkannten in den Ecken des Leiterholmes liegen, wobei in die Lappen (9) an den Kannten, die in den Ecken des Leiterholmes liegen, und an den Eckbereichen (5) der Lamelle (8) Ausnehmungen (4) angeordnet sind.

## Claims

1. Joint of a ladder longitudinal member with a ladder hinge, whereby the ladder longitudinal member (3) and the hinge limb (2) of the ladder hinge (1) overlap in an area (L) in which joints produced by deformation are located, in which material of the ladder longitudinal member (3) can be introduced into recesses (4) or indentations in the hinge limb (2) and vice versa, **characterised in that** the joints (F_{N}, F_{U}) are located in edge-forming corner areas (5, 6) of the hinge limbs (2) and ladder longitudinal members (3) such that the material from edges can be introduced into recesses (4) or indentations in edges.

2. Joint of a ladder longitudinal member with a ladder hinge according to claim 1, **characterised in that** the recesses (4) provided in the hinge limbs (2) and the joint (F_{U}) produced by deformation exhibit an essentially rectangular or circular shape in plan view.

3. Joint of a ladder longitudinal member with a ladder hinge according to claim 1 or 2, **characterised in that** at least one joint (F_{U}) produced by deformation is located in every corner area (5, 6) of the hinge limb (2) and the ladder longitudinal member (3).

4. Joint of a ladder longitudinal member with a ladder hinge according to one of claims 1 to 3, **characterised in that** a plurality of joints (F_{N}, F_{U}) are arranged one after another in the longitudinal direction of the ladder longitudinal member (3).

5. Joint of a ladder longitudinal member with a ladder hinge according to one of claims 1 to 4, **characterised in that** when a hinge limb (2) in the form of a plate (8) is used, an H-shaped incision is made in the latter, and in that the flaps (9) formed by the incision are bent in the direction of the opposite side of the ladder longitudinal member (3) so that they lie with their outer edges in the corners of the ladder longitudinal member, whereby recesses (4) are located in the flaps (9) in the edges which lie in the corners of the ladder longitudinal member, and in the corner areas (5) of the plate (8).

## Revendications

1. Liaison d'un montant sur une articulation d'échelle, dans laquelle le montant d'échelle (3) et la paumelle d'articulation (2) de l'articulation d'échelle (1) se recouvrent sur une zone (L) dans laquelle sont prévus des emboîtements d'assemblage obtenus par déformation, le matériau du montant (3) s'insérant dans des encoches (4) ou des évidements de la paumelle d'articulation (2), et inversement,
**caractérisée en ce que**
les emboîtements (F_{N}, F_{U}) sont disposés sur des zones d'angle formant arêtes (5, 6) de la paumelle (2) et du montant (3), de façon telle que le matériau dépassant des arêtes s'introduit dans les encoches (4) ou évidements ménagés dans les arêtes.

2. Liaison d'un montant sur une articulation d'échelle suivant la revendication 1,
**caractérisée en ce que**
les encoches (4) formées dans les paumelles (2) et les emboîtements d'assemblage (F_{U}) obtenus par déformation présentent, en vue de dessus, une forme rectangulaire ou circulaire.

3. Liaison d'un montant sur une articulation d'échelle suivant la revendication 1,
**caractérisée en ce que**
chaque zone d'angle (5, 6) de la paumelle (2) et du montant d'échelle (3) comporte au moins un emboîtement d'assemblage (F_{U}) obtenu par déformation.

4. Liaison d'un montant sur une articulation d'échelle suivant l'une des revendications 1 à 3,
**caractérisée en ce que**
dans la direction longitudinale du montant (3), plusieurs emboîtements d'assemblage (F_{N}, F_{U}) sont insérés l'un derrière l'autre.

5. Liaison d'un montant sur une articulation d'échelle suivant l'une des revendications 1 à 4,
**caractérisée en ce que**
en cas d'utilisation d'une paumelle d'articulation (2) sous forme d'une lamelle (8), on découpe dans celle-ci une entaille en forme de H, et les languettes (9) formées par la découpe sont courbées en direction de la face opposée du montant (3), de sorte que les arêtes extérieures des languettes se trouvent dans les angles du montant, des encoches (4) prévues dans les languettes (9) étant associées aux arêtes se trouvant dans les angles du montant et aux zones d'angles (5) de la lamelle (8).
